# EUROPÄISCHE PATENTSCHRIFT

(11) **EP 0 490 070 B1**
(45) Veröffentlichungstag und Bekanntmachung des Hinweises auf die Patenterteilung: **27.07.1994**
(21) Anmeldenummer: 91118171.7
(22) Anmeldetag: 24.10.1991
(51) Int. Cl.: A01D 34/74

(54) **Mähwerk**
Mower
Faucheuse

(30) Priorität: 14.12.1990 DE 9016922 U
(43) Veröffentlichungstag der Anmeldung: 17.06.1992
(73) Patentinhaber: GREENLAND GMBH & CO. KG, D-78244 Gottmadingen (DE)
(72) Erfinder: Singer, Hans, W-7705 Steisslingen (DE); Maier, Martin, W-7702 Gottmadingen (DE)
(74) Vertreter: Grünecker, Kinkeldey, Stockmair & Schwanhäusser Anwaltssozietät

(56) Entgegenhaltungen:
- EP-A- 0 400 699
- DE-A- 1 915 472
- DE-A- 2 338 593
- DE-A- 3 316 204
- DE-A- 3 411 354
- DE-A- 3 622 855
- GB-A- 1 098 492
- GB-A- 1 194 614
- US-A- 3 389 539

## Beschreibung

Die Erfindung betrifft ein Mähwerk der im Oberbegriff des Patentanspruchs 1 angegebenen Art.

Bei einem aus DE-A1-23 38 593 bekannten Mähwerk dieser Art weist die auf dem Rahmen stationär montierte Verstellvorrichtung zwei parallele und sich bezüglich der Drehachse des Mähtellers diametral gegenüberliegende, vertikale Stangen auf, die mit einer Hülse gekoppelt sind, die sich auf einem stationären Führungsrohr einer Antriebswelle des Mähtellers axial verschiebbar befindet. Im unteren, freien Ende der Hülse ist ein Wälzlager angeordnet, in dem ein sich mit der Antriebswelle drehender Antriebsteil des Mähtellers drehbar gelagert ist. Der Antriebsteil ist in axialer Richtung verschiebefest mit dem Wälzlager verbunden. Durch Ziehen an den Stangen wird die Hülse mitgeschleppt, die über das Wälzlager den Antriebsteil und damit den Mähteller anhebt.

Bei einem aus DE-A1-34 11 354 bekannten Mähwerk dieser Art ist eine auf einem stationären Führungsrohr der Antriebswelle des Mähtellers vertikal verschiebbare Hülse mit einem exzentrischen Gewindeauge ausgebildet, in das eine rahmenfestgehaltene Schraubspindel von oben eingreift. Die Hülse trägt außen ein Wälzlager, auf dem das obere Ende eines hülsenförmigen Antriebsteils des Mähtellers verdrehbar aber axial fest gelagert ist. Durch Verschieben der Hülse mittels der Gewindespindel wird der Mähteller über den Antriebsteil mitverstellt.

Bei einem aus der DE 19 15 472 bekannten Trommelmähwerk ist im Inneren eines auf dem Mähteller befestigten Trommelmantels an einer den Mähteller und den Trommelmantel tragenden Hülse ein exzentrischer Vorsprung angeordnet, in dem eine parallel zur Drehachse liegende Stellschraube verschraubbar ist. Die Hülse ist auf einem Antriebsteil auf und ab verschiebbar geführt. Der Antriebsteil weist ebenfalls einen exzentrischen Vorsprung mit einer Durchgangsbohrung für die Stellschraube auf. Der Kopf der Stellschraube stützt sich über eine den Mähteller in Heberichtung beaufschlagende Feder auf dem Vorsprung des Antriebsteils ab. Ein Querstift in der Stellschraube wird von der Feder gegen die Unterseite des Vorsprungs des Antriebsteils gedrückt. In einer vorbestimmten Drehposition des Mähtellers läßt sich von oben ein Steckschlüssel einführen, mit dem die Stellschraube verdreht wird und den Mähteller relativ zum Bodenstützteil hebt oder senkt. Die Betätigung dieser Schnitthöhen-Verstellvorrichtung ist mühsam und nur im Stillstand möglich. Ferner erzeugt die mit dem Mähteller rotierende Verstellvorrichtung im Betrieb unerwünschte Unwuchten.

Bei einem aus der DE-A1-33 16 204 bekannten Trommelmähwerk einer anderen Bauart beaufschlagt die Schnitthöhen-Verstellvorrichtung den Bodenstützteil, der relativ zum Mähteller gehoben oder abgesenkt wird. Eine Verstellung der Schnitthöhe läßt sich nur bei stillstehendem Trommelmähwerk vornehmen. Ungünstig ist, daß das Gesamtgewicht des Trommelmähwerks auf der Schnitthöhen-Verstellvorrichtung lastet. Das Prinzip, den Bodenstützteil relativ zum Mähteller zu verstellen, ist ferner aus DE-A1-36 22 855 und EP-A1-04 00 699 bekannt.

Der Erfindung liegt die Aufgabe zugrunde, ein Mähwerk der eingangs genannten Art zu schaffen, bei dem mit einer baulich einfachen Verstellvorrichtung die Schnitthöhe auch im Betrieb verstellbar ist, und bei dem Unwuchten vermieden werden.

Die gestellte Aufgabe wird mit den im kennzeichnenden Teil des Anspruchs 1 angegebenen Merkmalen gelöst.

Bei dieser Ausbildung steht die exzentrisch zur Drehachse angeordnete Schnitthöhen-Verstellvorrichtung während des Betriebes still, so daß sie keine zusätzlichen Unwuchten erzeugt. Eine Verstellung der Schnitthöhe läßt sich sowohl im Betrieb als auch bei stillstehendem Mähteller unabhängig von dessen Drehposition vornehmen. Die Verstellung ist einfach und feinfühlig von außen vorzunehmen. Die Schnitthöhen-Verstellvorrichtung wird nicht mit dem Gewicht des Mähwerks belastet. Für die Verstellung werden nur wenige einfache Komponenten benötigt, weil das Stellglied direkt und exzentrisch an der rotationssymmetrischen Angriffsfläche angreift.

Bei der Ausführungsform gemäß Anspruch 2 rufen weder das Stellelement noch das Federelement im Betrieb Unwuchten hervor. Das vorzugsweise vorgesehene Federelement braucht nur so stark zu sein, daß es das Gewicht des Mähtellers mit den damit verbundenen Komponenten zu überwinden vermag. Daraus ergeben sich geringe Verstellkräfte.

Ein weiterer, wichtiger Gedanke geht aus Anspruch 3 hervor. Über den Abwälzeingriff wird die Stellkraft auf das Stellelement übertragen. Es tritt kein spürbarer Verschleiß auf. Der Drehwiderstand des Stellglieds ist für die Mähleistung vernachlässigbar.

Alternativ kann ferner gemäß Anspruch 4 vorgegangen werden, wobei die relative Drehbewegung zwischen den stillstehenden und den rotierenden Teilen im Stellelement oder zwischen dem Stellelement und dem Mähteller stattfindet.

Eine funktionssichere Ausführungsform geht aus Anspruch 5 hervor. Die für die Schnitthöhenverstellung verantwortlichen Komponenten befinden sich relativ hoch oben und damit in großer Entfernung vom Mähteller. Das Federelement wirkt unmittelbar zwischen den beiden relativ zueinander verstellbaren Komponenten des Mähwerks.

Wichtig ist ferner der Gedanke von Anspruch 6, weil der Linearantrieb funktionssicher und mit hoher Stellgenauigkeit arbeitet.

Eine weitere, vorteilhafte Ausführungsform, bei der an der Oberseite des Mähtellers ein die Nabe mit radialem Abstand umfassender Trommelmantel angeordnet ist, geht aus Anspruch 7 hervor. Die Betätigung der Verstellvorrichtung ist einfach von außen möglich. Die bei der Verstellung zusammenwirkenden Komponenten sind hingegen geschützt im Trommelinneren untergebracht, wo sie mit dem Mähgut nicht in Kontakt treten. Der im Trommelinneren ohnedies vorhandene Raum wird gewinnbringend genutzt.

Eine baulich einfache und robuste Ausführungsform geht aus Anspruch 8 hervor.

Für die Praxis hat sich die Ausführungsform gemäß Anspruch 9 bewährt. Das Kegelradgetriebe ermöglicht eine feinfühlige Verstellung der Schnitthöhe. Durch eine selbsthemmende Ausbildung der Gewindeverbindung wird eine selbsttätige und ungewollte Verstellung der Schnitthöhe vermieden.

Alternativ ist auch die Ausführungsform gemäß Anspruch 10 zweckmäßig. Ein hydraulischer Stellzylinder, der wie ein Wagenheber von Hand oder von der Hydraulik des Schleppfahrzeugs aus betätigt wird, führt reproduzierbare und kleine Stellhübe aus und läßt sich einfach hydraulisch blockieren, um eine ungewollte Schnitthöhenverstellung zu unterdrücken.

Bei der Ausführungsform gemäß Anspruch 11 drückt das Stellglied schräg nach innen auf das Stellelement, um den Mähteller, gegebenenfalls gegen die Kraft des Federelements, nach unten zu drücken bzw. durch das Federelement heben zu lassen. Im Betrieb ist stets Kontakt zwischen der Laufrolle und dem Stellelement vorhanden, der die Schnitthöhe aufrechterhält.

Alternativ ist die Ausführungsform gemäß Anspruch 12 zweckmäßig, bei der aus der Verstellung und dem Halten des Mähtellers in der eingestellten Schnitthöhe keine nennenswerten exzentrischen Kräfte auftreten.

Eine alternative Ausführungsform geht ferner aus Anspruch 13 hervor. Die Verstellvorrichtung wirkt in Heberichtung des Mähtellers ein, und zwar entweder gegen die Kraft des Federelementes, das den Mähteller in Richtung zum Boden zu verlagern sucht, oder nur gegen das Gewicht des Mähtellers und der mit diesem verstellbaren Komponenten.

Im Hinblick auf eine Reparatur, auf Wartungsarbeiten oder dgl. sind die Ausführungsformen der Ansprüche 14 und 15 zweckmäßig.

Schließlich ist noch der Gedanke von Anspruch 16 vorteilhaft, bei dem die Verstellvorrichtung den Mähteller in beiden Verstellrichtungen beaufschlagt und stets eine eindeutige und formschlüssige Positionierung des Mähtellers in der eingestellten Schnitthöhe vornimmt. Das Stellglied kann dabei mit den Angriffsflächen in einem Abwälzeingriff stehen, um die Reibungskräfte so gering wie möglich zu halten. Es ist aber auch denkbar, einen Gleit- oder Reibeingriff zu wählen und die kooperierenden Flächen bzw. Elemente so auszubilden oder zu schmieren, daß trotz geringen Verschleißes nur vernachlässigbar geringe Reibungskräfte auftreten.

Möglich ist es gemäß Anspruch 17 auch, zwischen der den Mähteller tragenden Nabe und dem Antriebsteil eine mehrere vorbestimmte Schnitthöhen definierende Federverrastung vorzusehen (z.B. ein radiales, federbelastetes Rastglied, das in axial beabstandete Rastkerben einrastet), und den Mähteller mit der Verstellvorrichtung zwischen den Rastpositionen zu verschieben, wobei die Verrastung in jeder gewählten Position dann für die Positionierung des Mähtellers verantwortlich und die Verstellvorrichtung von dieser Positionierfunktion entlastet ist.

Anhand der Zeichnung werden Ausführungsformen des Erfindungsgegenstandes erläutert. Es zeigen:
- Fig. 1: einen schematischen Achsschnitt eines Mähwerks,
- Fig. 2: einen Teil eines schematischen Achsschnittes des Mähwerks mit einer abgeänderten Ausführung der Verstellvorrichtung, und
- Fig. 3 - 5: Detailvariationen.

Ein Mähwerk T, vorzugsweise ein Trommelmähwerk, weist einen im Betrieb über den Boden bewegten Rahmen R auf, an dem unterseitig ein Mähteller M zur Drehung antreibbar gelagert ist. Das Mähwerk T stützt sich auf den Boden mittels eines das Gewicht des Mähwerks tragenden Bodenstützteils B ab, der unterhalb des Mähtellers liegt. Am Rahmen R, der ein Getriebegehäuse G aufweist, ist exzentrisch eine Schnitthöhen-Verstellvorrichtung V stationär und lösbar befestigt, die auf ein mit dem Mähteller M verbundenes Stellelement S mit einem Stellglied T einwirkt, um durch Heben oder Senken des Mähtellers M in Relation zum Bodenstützteil B die Schnitthöhe zu verstellen.

Eine annähernd vertikale Antriebswelle 1, die die Drehachse 1a des Mähtellers M definiert, erstreckt sich vom Getriebegehäuse G durch ein stationäres Stützrohr 6 nach unten bis zum Bodenstützteil. Im unteren Endbereich der Antriebswelle 1 ist ein hülsenförmiger Antriebsteil 5 festgelegt und durch eine Feder 4 mit der Antriebswelle 1 drehverbunden. Über Lager 2 ist auf dem unteren Ende des Antriebsteils 5 ein Tragkörper 3 drehbar gelagert, an dem der Bodenstützteil B befestigt ist. Gegebenenfalls ist zwischen dem unteren Ende des Stützrohres 6 und der Antriebswelle 1 ein weiteres Lager 7 vorgesehen. Der Antriebsteil 5 sitzt nahe seines oberen Endes auf einem Lager 10 des Stützrohrs 6. Auf dem Antriebsteil 5 ist außen eine hülsenförmige Nabe 8 in Richtung der Drehachse 1a verschiebbar geführt, die mit dem Antriebsteil 5 über eine Feder 9 drehverbunden ist.

Unterhalb des Getriebegehäuses G ist am Stützrohr 6 eine Blechabdeckung 11 befestigt, die den oberen Rand eines auf dem Mähteller M befestigten Trommelmantels 12 übergreift. Die am Rahmen R bzw. am Getriebegehäuse G an einem Widerlager 22 befestigte Schnitthöhen-Verstellvorrichtung V ragt von außen ins Innere des Trommelmantels 12 und schräg in Richtung zur Drehachse 1a.

Auf dem oberen Ende der Nabe 8 ist das als Ring ausgebildete Stellelement S, wie bei 13 angedeutet, befestigt. Das Stellelement S kann bezüglich der Drehachse 1a rotationssymmetrisch ausgebildet sein und weist oberseitig eine rotationssymmetrische Angriffsfläche A auf, die als Kegelstumpf-Mantelfläche 23 ausgebildet ist.

In der Schnitthöhen-Verstellvorrichtung V ist eine Spindel 14 mittels eines Linearantriebs L in einem Gehäuse 20 verschiebbar. Die Spindel 14 trägt an ihrem unteren Ende das Stellglied T, das als Laufrolle 16 ausgebildet und auf einer Laufachse 15 in der Spindel 14 drehbar gelagert ist. Die Laufachse 15 liegt in einer zur Drehachse 1a radialen Ebene. Die Anstellung der Spindel 14 ist so gewählt, daß sie in etwa senkrecht auf die Erzeugende der Angriffsfläche A gerichtet ist.

Das obere Ende der Spindel 14 ist mit einem Gewinde 17 versehen und greift in ein Innengewinde eines als Stellmutter 18 ausgebildeten Kegelrads ein, das im Gehäuse 20 drehbar, jedoch in axialer Richtung fest, gelagert ist und mit einem Betätiger 19 in Form eines Kegelrades kämmt. Am Betätiger 19 greift entweder eine nicht dargestellte Kurbel oder ein geeigneter Stellantrieb an. Als Verdrehsicherung für die Spindel 14 dient eine Paßfeder 21 im Gehäuse 20.

Nahe des äußeren Randes des Mähtellers M sind Schneidmesser 24 angeordnet. Gegebenenfalls ist der Außenrand des Mähtellers M selbst als Schneidrand ausgebildet.

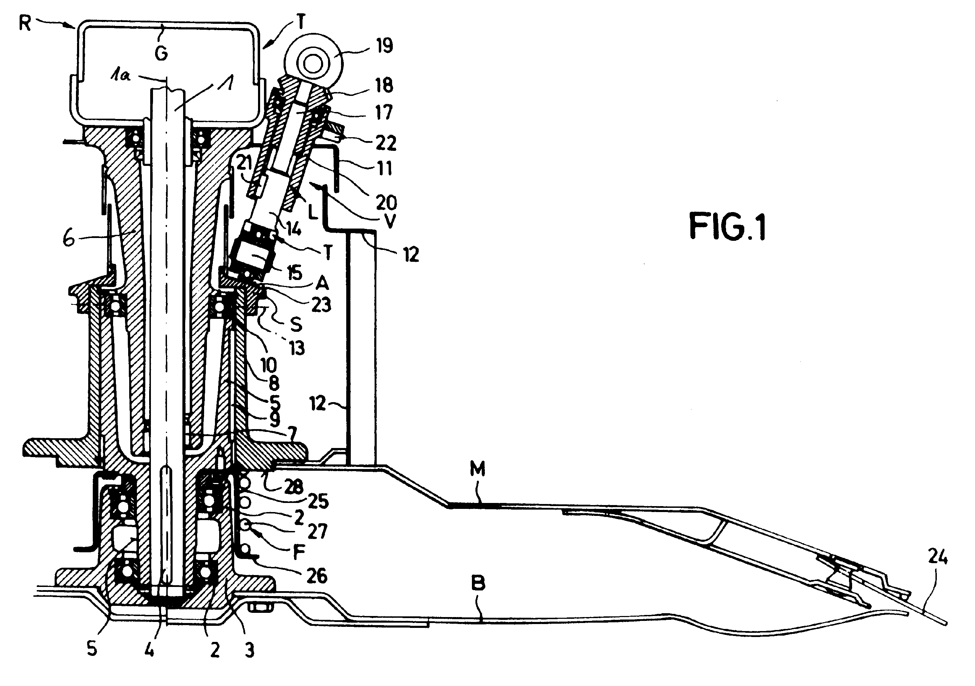

An einer Schulter des Antriebsteils 5 ist eine Hülse 25 befestigt, die ein Widerlager 26 für ein zur Drehachse 1a konzentrisches Federelement 27, z.B. eine vorgespannte Druckfeder, bildet, das mit ihrem oberen Ende an einer Unterseite 28 der Nabe 8 anliegt und die Nabe 8 mit dem Mähteller M in Fig. 1 nach oben belastet, so daß die Angriffsfläche A gegen das Stellglied T angedrückt wird. Das Federelement F (Druckfeder 27) ist so ausgelegt, daß es gerade das Gewicht des Mähtellers M mit dem Trommelmantel 12 und der Nabe 8 mit dem Stellelement S sowie den Schiebewiderstand der Nabe 8 auf dem Antriebsteil 5 zu überwinden vermag.

In Fig. 1 wird durch das Zusammenspiel zwischen dem Federelement F und dem an der Angriffsfläche A anliegenden Stellglied T eine bestimmte Schnitthöhe vorgegeben. Im Betrieb wird die Antriebswelle 1 angetrieben, so daß der Mähteller M rotiert. Dabei wälzt sich das Stellglied T auf der Angriffsfläche A ab. Der Bodenstützteil B steht relativ zur Antriebswelle 1 still.

Ist es erforderlich, die Schnitthöhe zu verstellen, dann wird mittels des Betätigers 19 die Spindel 14 weiter nach oben oder weiter nach unten verstellt. Bei einer Verstellung der Spindel 14 nach oben schiebt das Federelement F die Habe 8 mit dem Mähteller der vorgenommenen Verstellung entsprechend nach oben, so daß der Kontakt zwischen dem Stellglied T und der Angriffsfläche A aufrecht bleibt und der Mähteller M in Relation zum Bodenstützteil B angehoben wird. Bei einer Verstellung nach unten drückt das Stellglied T über die Angriffsfläche A und das Stellelement S die Nabe 8 gegen die Kraft des Federelementes F nach unten.

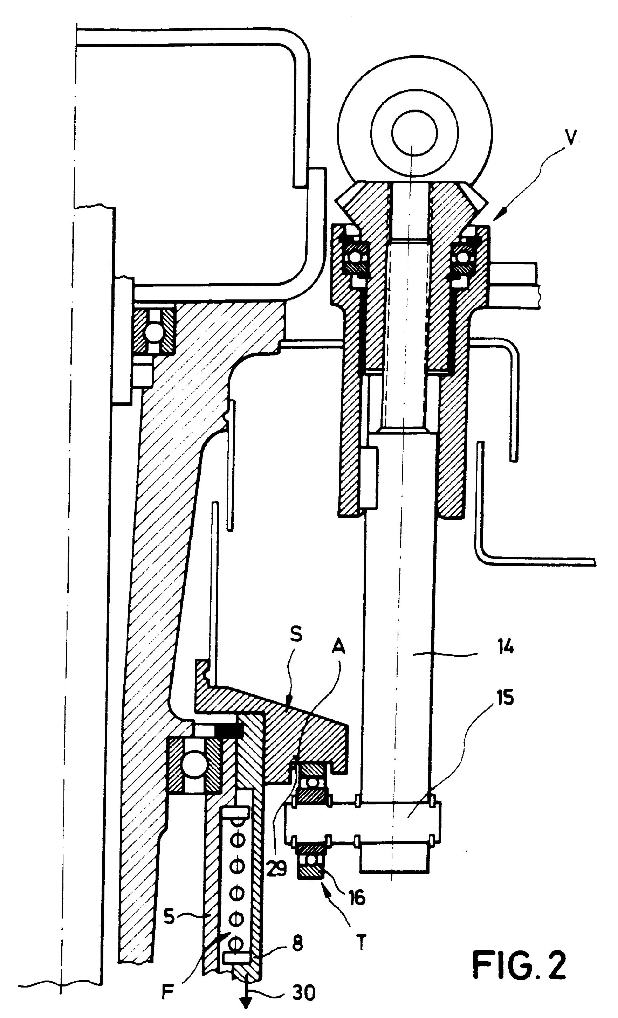

Bei der Ausführungsform der Fig. 2 ist die Schnitthöhen-Vestellvorrichtung V annähernd parallel zur Antriebswelle ausgerichtet. Das Stellglied T am unteren Ende der Spindel 14 untergreift das Stellelement S, das die Angriffsfläche A für das Stellglied T in seiner Unterseite, z.B. in einer umlaufenden Nut 29, aufweist. Zwischen der Nabe 8 und dem Antriebsteil 5 kann ein Federelement F vorgesehen sein, das bei dieser Ausführungsform die Nabe 8 in Richtung des Pfeiles 30 nach unten zu drücken versucht und somit die Angriffsfläche A in Anlage am Stellglied T hält. Im Hinblick darauf, daß das Gewicht des Mähtellers, der Nabe 8 und weiterer Komponenten ohnedies in Richtung des Pfeiles 30 wirksam ist, kann das Federelement F gegebenenfalls weggelassen werden, da das Gewicht die Angriffsfläche A in Anlage am Stellglied T hält.

Anstelle einer Laufrolle 16, wie in den Fig. 1 und 2 dargestellt, könnte auch ein Gleitschuh vorgesehen werden.

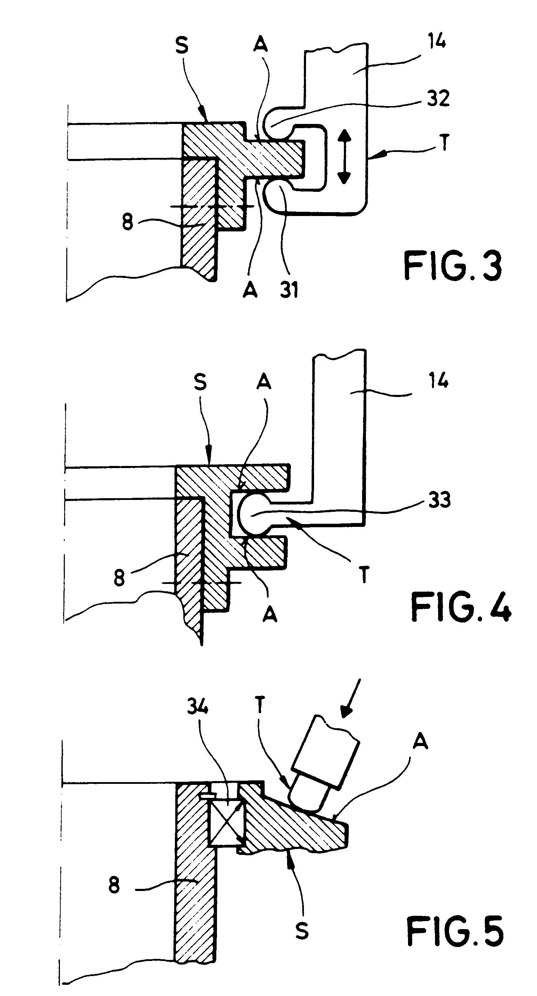

Wie in Fig. 5 angedeutet, könnte das Stellglied T in Fig. 1 als Druckstößel ausgebildet sein, der mit der Angriffsfläche A in Reibeingriff steht. Um trotzdem im Betrieb eine Drehverbindung zu erreichen, wird das Stellelement S über ein Lager 34 drehbar an der Nabe 8 gelagert. Es wäre auch denkbar, nur die Angriffsfläche A drehbar am Stellelement zu lagern und das Stellelement wie in Fig. 1 fest mit der Nabe 8 zu verbinden.

Bei der Ausführungsform der Fig. 3 ist die Verstellvorrichtung so ausgebildet, daß das Stellelement S und damit die Nabe 8 in beiden Stellrichtungen (Doppelpfeil) vom Stellglied T verstellt wird. Ein Federelement könnte dann - wenn überhaupt - zur Gewichtskompensation vorgesehen sein. Das Stellglied T ist mit zwei entgegengesetzt gerichteten Klauen 31, 32 versehen, die zwei am Stellelement S vorgesehene Angriffsflächen A beaufschlagen.

Bei der Ausführungsform der Fig. 4 ist das Stellelement S an der Nabe 8 mit zwei innenliegenden Angriffsflächen A ausgestattet. Das Stellglied T ist als zwischen die Angriffsflächen A eingreifender Fortsatz 33 an der Spindel 14 ausgebildet. Auch bei dieser Ausführungsform verstellt das Stellglied T das Stellelement S in beiden Stellrichtungen. Bei beiden Ausführungsformen gemäß den Fig. 3 und 4 könnte das Stellelement S in etwa in der in Fig 5 gezeigten Weise von der Nabe 8 entkoppelt werden.

Bei einer nicht gezeigten, weiteren Ausführungsform ist zwischen der Nabe 8 und dem Antriebsteil 5 eine federnde Verrastung mit mehreren und unterschiedlichen Schnitthöhen entsprechenden Raststellungen vorgesehen. Der Mähteller M wird in jeder Raststellung von der Federverrastung positioniert. Das Stellglied T, z.B. ähnlich dem von Fig. 3 und 4, hat die Aufgabe, jeweils die Verstellung durchzuführen. Im Betrieb sind das Stellglied T und die Verstellvorrichtung von Reaktionskräften aus der Rotation des Mähtellers und der Nabe freigestellt. Die Verstellvorrichtung könnte als einfacher Zug- und Druckmechanismus ausgebildet werden, z.B. mit einem Schwenkhebel, dessen jeweilige Schwenklage die gewählte Schnitthöhe anzeigt.

## Patentansprüche

1. Mähwerk, insbesondere Trommelmähwerk, mit einem an einem Rahmen (R) um eine annähernd vertikale Drehachse (1a) antreibbaren Mähteller (M), einem unter dem Mähteller (M) angeordneten Bodenstützteil (B), und einer an einem Stellelement (S) des Mähtellers (M) angreifenden, am Rahmen (R) stationär angeordneten Schnitthöhen-Verstellvorrichtung (V), mit der der Abstand des Mähtellers (M) vom Bodenstützteil (B) verstellbar ist, **dadurch gekennzeichnet**, daß das mit dem Mähteller (M) rotierende Stellelement (S) wenigstens eine zur Drehachse (1a) des Mähtellers (M) rotationssymmetrische Angriffsfläche (A) für ein Stellglied (T) der Schnitthöhen-Verstellvorrichtung (V) aufweist, und daß das Stellglied (T) an einem in Umfangsrichtung eng begrenzten, zur Drehachse (1a) exzentrischen Bereich der Angriffsfläche (A) zum Angriff bringbar ist.

2. Mähwerk nach Anspruch 1, **dadurch gekennzeichnet**, daß das Stellelement (S) sowie ggfs. wenigstens ein den Mähteller (M) in einer Verstellrichtung beaufschlagendes Federelement (F) jeweils zur Drehachse (1a) des Mähtellers rotationssymmetrisch angeordnet sind.

3. Mähwerk nach Anspruch 1, **dadurch gekennzeichnet**, daß das Stellglied (T) mit der Angriffsfläche (A) in einem Abwälzeingriff steht und drehbar an der Schnitthöhen-Verstellvorrichtung (V) gelagert ist.

4. Mähwerk nach Anspruch 1, **dadurch gekennzeichnet**, daß das Stellglied (T) mit der Angriffsfläche (A) in einem Reibeingriff steht, und daß die Angriffsfläche (A) relativ zum Stellelement (S) bzw. zum Mähteller (M) um die Drehachse (1a) drehbar ist.

5. Mähwerk nach den Ansprüchen 1 bis 4, **dadurch** **gekennzeichnet**, daß der Mähteller (M) am unteren Endbereich und das Stellelement (S) am oberen Endbereich einer in Richtung der Drehachse (1a) auf einem Antriebsteil (5) verschiebbar geführten Nabe (8) angeordnet ist, und daß das wenigstens eine Federelement (F) zwischen der Nabe (8) und dem Antriebsteil (5) vorgesehen ist.

6. Mähwerk nach den Ansprüchen 1 bis 5, **dadurch** **gekennzeichnet**, daß die Schnitthöhen-Verstellvorrichtung (V) einen Linearantrieb (L) für das Stellglied (T) aufweist.

7. Mähwerk nach einem der Ansprüche 1 bis 6, wobei an der Oberseite des Mähtellers ein die Nabe mit radialem Abstand umfassender Trommelmantel (12) angeordnet ist, **dadurch gekennzeichnet**, daß sich die Schnitthöhen-Verstellvorrichtung (V) vom Rahmen (R) und exzentrisch zur Drehachse ins Innere des Trommelmantels (12) erstreckt und einen Betätiger (19) aufweist, der am Rahmen (R) frei zugänglich ist, während die beweglichen Komponenten und das Stellglied (T) im Trommelinneren abgeschirmt angeordnet sind.

8. Mähwerk nach einem der Ansprüche 1 bis 7, **dadurch gekennzeichnet**, daß in der Schnitthöhen-Verstellvorrichtung (V) in einem Gehäuse (20) eine Spindel (14) drehfest und verschiebbar gelagert ist, die das Stellglied (T) trägt, daß das Stellglied (T) eine Laufrolle (16) ist, deren Achse (15) in einer zur Drehachse (1a) des Mähtellers (M) radialen Ebene liegt, und daß der Linearantrieb (L) im Gehäuse (20) untergebracht ist.

9. Mähwerk nach Anspruch 8, **dadurch gekennzeichnet**, daß der Linearantrieb (L) ein kurbel- oder stellmotorbetätigtes Kegelradgetrieb ist, und daß die Spindel (14) mit einem Gewindeende (17) in eine Antriebsmutter (18) des Kegelradgetriebes eingreift.

10. Mähwerk nach Anspruch 8, **dadurch gekennzeichnet**, daß der Linearantrieb (L) ein, z.B. hydraulischer, Stellzylinder ist.

11. Mähwerk nach einem der Ansprüche 1 bis 10, **dadurch** **gekennzeichnet**, daß die Angriffsfläche (A) eine Kegelstumpfmantelfläche (23) an der Oberseite des Stellelementes (S) ist, und daß die Schnitthöhen-Verstellvorrichtung (V) mit ihrer Spindel (14) in etwa senkrecht zur Erzeugenden des Kegelstumpfes und schräg von außen nach innen angeordnet ist, derart, daß die Laufrolle (16) von oben auf das Stellelement (S) drückt.

12. Mähwerk nach einem der Ansprüche 1 bis 10, **dadurch** **gekennzeichnet**, daß die Angriffsfläche (A, 29) radial zur Drehachse (1a) des Mähtellers (M) liegt, und daß die Schnitthöhen-Verstellvorrichtung (V) mit ihrer Spindel (14) parallel zur Drehachse (1a) angeordnet ist.

13. Mähwerk nach den Ansprüchen 8 und 12, **dadurch** **gekennzeichnet**, daß die Laufrolle (16) an der Spindel (14) das Stellelement (S) untergreift, daß die Angriffsfläche (A, 29) an der Unterseite des Stellelements (S) angeordnet ist, und daß dem Anpreßdruck des Stellglieds das Gewicht im wesentlichen des Mähtellers (M) mit der Nabe (8) und dem Trommelteil (12) des Mähtellers (M) und die Kraft des Federelements (F) oder nur das vorerwähnte Gewicht (30) entgegenwirkt.

14. Mähwerk nach einem der Ansprüche 1 bis 13, **dadurch gekennzeichnet**, daß die Schnitthöhen-Verstellvorrichtung (V) am Rahmen (R) lösbar befestigt ist.

15. Mähwerk nach einem der Ansprüche 1 bis 14, **dadurch** gekennzeichnet, daß die Schnitthöhen-Verstellvorrichtung (V) an einem am Rahmen (R) angeordneten Getriebegehäuse (G) lösbar befestigt ist.

16. Mähwerk nach einem der Ansprüche 1 bis 15, **dadurch** **gekennzeichnet**, daß am Stellelement (S) eine untere und eine obere Angriffsfläche (A) vorgesehen ist, und daß das Stellglied (T) in Abhängigkeit von der Verstellrichtung an jeder der beiden Angriffsflächen zum Angriff bringbar ist.

17. Mähwerk nach einem der Ansprüche 1 bis 16, **dadurch gekennzeichnet**, daß zwischen dem Antriebsteil (5) und der Nabe (8) eine mehrere Schnitthöhen bestimmende, vorzugsweise selbsthaltende, Federverrastung vorgesehen ist, und daß das Stellglied (T) zur Überwindung der Rastkraft an der Angriffsfläche (A) zum Angriff bringbar und, vorzugsweise bei eingerasteter Federverrastung aus dem Angriff entlastbar ist.

## Claims

1. Mower, more especially a drum-type mower, having a mowing plate (M) which is drivable about an approximately vertical rotary axis (1a) on a frame (R), a ground supporting member (B) which is disposed beneath the mowing plate (M), and a cutting height adjusting means (V) which co-operates with an adjusting element (S) of the mowing plate (M) and is disposed in a stationary manner on the frame (R), the spacing between the mowing plate (M) and the ground supporting member (B) being adjustable by said adjusting means, characterised in that the adjusting element (S), which rotates with the mowing plate (M), has at least one area of contact (A) for an adjusting member (T) of the cutting level adjusting means (V), which area is rotationally symmetrical relative to the rotary axis (1a) of the mowing plate (M), and in that the adjusting member (T) can be brought into engagement with a region of the area of contact (A), such region being closely defined when viewed with respect to the circumferential direction and being eccentric relative to the rotary axis (1a).

2. Mower according to claim 1, characterised in that the adjusting element (S) and possibly at least one resilient element (F), which actuates the mowing plate (M) in a direction of adjustment, are each disposed in a rotationally symmetrical manner relative to the rotary axis (1a) of the mowing plate.

3. Mower according to claim 1, characterised in that the adjusting member (T) is in rolling engagement with the area of contact (A) and rotatably mounted on the cutting level adjusting means (V).

4. Mower according to claim 1, characterised in that the adjusting member (T) is in frictional engagement with the area of contact (A), and in that the area of contact (A) is rotatable about the rotary axis (1a) relative to the adjusting element (S) or respectively the mowing plate (M).

5. Mower according to claims 1 to 4, characterised in that the mowing plate (M) is disposed at the lower end region of a hub (8), and the adjusting element (S) is disposed at the upper end region of a hub (8), which is displaceably guided on a drive member (5) in the direction of the rotary axis (1a), and in that at least one resilient element (F) is provided between the hub (8) and the drive member (5).

6. Mower according to claims 1 to 5, characterised in that the cutting height adjusting means (V) has a linear drive (L) for the adjusting member (T).

7. Mower according to one of claims 1 to 6, a drum casing (12) being disposed on the upper side of the mowing plate and surrounding the hub with a radial spacing therebetween, characterised in that the cutting height adjusting means (V) extends from the frame (R) and eccentrically relative to the rotary axis into the interior of the drum casing (12) and has a control (19), which is freely accessible on the frame (R), while the moving components and the adjusting member (T) are disposed in a screened manner in the drum interior.

8. Mower according to one of claims 1 to 7, characterised in that a spindle (14) is non-rotatably and displaceably mounted in a housing (20) in the cutting level adjusting means (V) and carries the adjusting member (T), in that the adjusting member (T) is a roller (16), the axis (15) of which lies in a radial plane relative to the rotary axis (1a) of the mowing plate (M), and in that the linear drive (L) is accommodated in the housing (20).

9. Mower according to claim 8, characterised in that the linear drive (L) is a bevel gear which is actuated by a crank motor or an adjusting motor, and in that one threaded end (17) of the spindle (14) engages in a driving nut (18) of the bevel gear.

10. Mower according to claim 8, characterised in that the linear drive (L) is an operating cylinder, e.g. a hydraulically operating cylinder.

11. Mower according to one of claims 1 to 10, characterised in that the area of contact (A) is a frustoconical surface (23) on the upper side of the adjusting element (S), and in that the cutting height adjusting means (V) is disposed with its spindle (14) in a substantially perpendicular manner to produce the truncated cone and inclinedly inwardly from externally such that the roller (16) presses upon the adjusting element (S) from above.

12. Mower according to one of claims 1 to 10, characterised in that the area of contact (A, 29) lies radially relative to the rotary axis (1a) of the mowing plate (M), and in that the cutting height adjusting means (V) is disposed with its spindle (14) parallel to the rotary axis (1a).

13. Mower according to claims 8 and 12, characterised in that the roller (16) on the spindle (14) engages beneath the adjusting element (S), in that the area of contact (A, 29) is disposed on the underside of the adjusting element (S), and in that the weight substantially of the mowing plate (M) with the hub (8) and the drum portion (12) of the mowing plate (M) and the force of the resilient element (F), or only the above-mentioned weight (30), counteract the compression force of the adjusting member.

14. Mower according to one of claims 1 to 13, characterised in that the cutting height adjusting means (V) is detachably mounted on the frame (R).

15. Mower according to one of claims 1 to 14, characterised in that the cutting height adjusting means (V) is detachably mounted on a gear housing (G) disposed on the frame (R).

16. Mower according to one of claims 1 to 15, characterised in that a lower and an upper area of contact (A) are provided on the adjusting element (S), and in that the adjusting member (T) can be brought into engagement with each of the two areas of contact in dependence on the direction of adjustment.

17. Mower according to one of claims 1 to 16, characterised in that a resilient locking means, which determines a plurality of cutting heights and is preferably self-supporting, is provided between the drive member (5) and the hub (8), and in that the adjusting member (T) can be brought into engagement with the area of contact (A) to overcome the locking force and is releasable, preferably when the resilient locking means is locked in position.

## Revendications

1. Mécanisme faucheur, en particulier mécanisme faucheur à tambour avec un plateau faucheur (M) pouvant être entraîné autour d'un axe de rotation (1a) approximativement vertical sur un châssis (R), un élément d'appui au sol (B) disposé sous le plateau faucheur (M) et un dispositif de réglage de hauteur de coupe (V) monté fixement sur le châssis (R) et agissant sur un élément (S) de réglage du plateau faucheur (M) et par lequel la distance du plateau faucheur (M) à l'élément d'appui au sol (B) est réglable, caractérisé en ce que l'élément de réglage (S), tournant avec le plateau faucheur (M), comporte au moins une surface d'attaque (A) à symétrie de révolution autour de l'axe de rotation (1a) du plateau faucheur (M), pour un organe de réglage (T) du dispositif de réglage de hauteur de coupe (V) et en ce que l'organe de réglage (T) peut être mis en prise avec une zone de la surface d'attaque (A), étroitement limitée en direction périphérique et excentrée par rapport à l'axe de rotation (1a).

2. Mécanisme faucheur selon la revendication 1, caracrétisé en ce que l'élément de réglage (S) ainsi qu'éventuellement au moins un élément à ressort (S) sollicitant le plateau faucheur (M) dans un sens de réglage, sont montés respectivement selon une symétrie de révolution autour de l'axe de rotation (1a) du plateau faucheur.

3. Mécanisme faucheur selon la revendication 1, caractérisé en ce que l'organe de réglage (T) est en prise de roulement avec la surface d'attaque (A) et est monté de façon tournante sur le dispositif de réglage de hauteur de coupe (V).

4. Mécanisme faucheur selon la revendication 1, caractérisé en ce que l'organe de réglage (T) est en prise de friction avec la surface d'attaque (A) et en ce que la surface d'attaque (A) peut tourner autour de l'axe de rotation (1a) relativement à l'élément de réglage (S) ou au plateau faucheur (M).

5. Mécanisme faucheur selon les revendications 1 à 4, caractérisé en ce que le plateau faucheur (M) est disposé à la partie extrême inférieure et l'élément de réglage (S) est disposé à la partie extrême supérieure d'un moyeu (8) guidé de façon déplaçable en translation sur un élément d'entraînement (5) dans la direction de l'axe de rotation (1a) et en ce qu'au moins un élément à ressort (F) est prévu entre le moyeu (8) et l'élément d'entraînement (5).

6. Mécanisme faucheur selon les revendications 1 à 5, caractérisé en ce que le dispositif de réglage de hauteur de coupe (V) comporte une commande linéaire (L) pour l'organe de réglage (T).

7. Mécanisme faucheur selon l'une des revendications 1 à 6, dans lequel une paroi latérale de tambour (12), comprenant le moyeu à une distance radiale, est monté sur le côté supérieur du plateau faucheur, caractérisé en ce que le dispositif de réglage de hauteur de coupe (V) s'étend depuis le châssis (R) et excentriquement par rapport à l'axe de rotation en pénétrant dans l'intérieur de la paroi latérale de tambour (12) et comporte un actionneur (19) qui est librement accessible sur le châssis (R) tandis que les composants mobiles et l'organe de réglage (T) sont disposés de façon protégée dans l'intérieur du tambour.

8. Mécanisme faucheur selon l'une des revendications 1 à 7, caractérisé en ce que dans le dispositif de réglage de hauteur de coupe (V) dans un boîtier (20) est montée solidairement en rotation et déplaçable en translation, une tige (14) qui porte l'organe de réglage (T), en ce que l'organe de réglage (T) est un galet de roulement (16) dont l'axe (15) est situé dans un plan radial par rapport à l'axe de rotation (1a) du plateau faucheur (M) et en ce que la commande linéaire (L) est logée dans le boîtier (20).

9. Mécanisme faucheur selon la revendication 8, caractérisé en ce que la commande linéaire (L) est un engrenage à pignons coniques actionné par une manivelle ou par un moteur positionneur et en ce que la tige (14) pénètre par une extrémité filetée (17) dans un écrou d'entraînement (18) de l'engrenage à pignons coniques.

10. Mécanisme faucheur selon la revendication 8, caractérisé en ce que la commande linéaire (L) est un vérin positionneur à cylindre, par exemple hydraulique.

11. Mécanisme faucheur selon l'une des revendications 1 à 10, caractérisé en ce que la surface d'attaque (A) est une surface latérale tronconique (23) sur la face supérieure de l'élément de réglage (S) et en ce que le dispositif de réglage de hauteur de coupe (V) est disposé sensiblement perpendiculairement à la génératrice du tronc de cône et obliquement de l'extérieur vers l'intérieur de telle façon que le galet de roulement (16) appuie d'en haut sur l'élément de réglage (S).

12. Mécanisme faucheur selon l'une des revendications 1 à 10, caractérisé en ce que la surface d'attaque (A, 29) est située radialement par rapport à l'axe de rotation (1a) du plateau faucheur (M) et en ce que le dispositif de réglage de hauteur de coupe (V) est monté avec sa tige (14) parallèle à l'axe de rotation (1a).

13. Mécanisme faucheur selon les revendications 8 et 12, caractérisé en ce que le galet de roulement (16) sur la tige (14) est en prise par en dessous avec l'élément de réglage (S), en ce que la surface d'attaque (A, 29) est disposée sur la face inférieure de l'élément de réglage (S) et en ce qu'à l'encontre de la pression d'appui de l'organe de réglage agit le poids essentiellement du plateau faucheur (M) avec le moyeu (8) et l'élément à tambour (12) du plateau faucheur (M) et la force de l'élément à ressort (F) ou seulement le poids précité (30).

14. Mécanisme faucheur selon l'une des revendications 1 à 13, caractérisé en ce que le dispositif de réglage de hauteur de coupe (V) est fixé amoviblement au châssis (R).

15. Mécanisme faucheur selon l'une des revendications 1 à 14, caractérisé en ce que le dispositif de réglage de hauteur de coupe (V) est fixé amoviblement dans un boîtier d'engrenage (G) monté sur le châssis (R).

16. Mécanisme faucheur selon l'une des revendications 1 à 15, caractérisé en ce qu'une surface d'attaque inférieure (A) et une surface d'attaque supérieure (A) sont prévues sur l'élément de réglage (S) et en ce que l'organe de réglage (T) peut être mis en prise avec chacune des deux surfaces d'attaque en fonction du sens de réglage.

17. Mécanisme faucheur selon l'une des revendications 1 à 16, caractérisé en ce qu'un encliquetage à ressort, déterminant plusieurs hauteurs de coupe et de préférence un maintien automatique, est prévu entre l'élément d'entraînement (5) et le moyeu (8) et en ce que l'organe de réglage (T) peut être mis en prise avec la surface d'attaque (A) pour surmonter la force d'encliquetage et peut être déchargé de la mise en prise de préférence dans le cas de l'encliquetage à ressort enclenché.
